# EUROPÄISCHE PATENTSCHRIFT

(11) **EP 2 107 743 B1**
(45) Veröffentlichungstag und Bekanntmachung des Hinweises auf die Patenterteilung: **16.08.2017**
(21) Anmeldenummer: 09004890.1
(22) Anmeldetag: 02.04.2009
(51) Int. Cl.: H04L 12/58, H04L 29/06, H04W 8/18

(54) **Verfahren und Vorrichtung zur Einrichtung eines Benutzerkontos**
Method and device for setting up a user account
Procédé et dispositif pour créer un compte d'utilisateur

(30) Priorität: 04.04.2008 DE 102008017515
(43) Veröffentlichungstag der Anmeldung: 07.10.2009
(73) Patentinhaber: Vodafone Holding GmbH, 40213 Düsseldorf (DE)
(72) Erfinder: Rosenberger, Frank, 40668 Meerbusch (DE)
(74) Vertreter: Ring & Weisbrodt

(56) Entgegenhaltungen:
- US-A1- 2004 132 429
- US-B1- 6 788 769

## Beschreibung

Die vorliegende Erfindung betrifft ein Verfahren zur zumindest teilautomatischen Einrichtung eines Benutzerkontos eines Teilnehmers in einem IP-Netz zur Nutzung wenigstens eines Nachrichtendienstes des IP-Netzes (IP: Internet Protocol).

Gegenstand der vorliegenden Erfindung ist darüber hinaus ein Netzknoten in einem Mobilfunknetz, vorzugsweise einem GSM-, GPRS- und/oder UMTS-Funknetzstandard, welcher an einer über das Mobilfunknetz erfolgenden Kommunikationsverbindung zwischen einer Vorrichtung zur Einrichtung und/oder Verwaltung von Benutzerkonten von Teilnehmern in dem IP-Netz und einem Teilnehmer in dem Mobilfunknetz beteiligt ist und welcher zur zumindest teilautomatischen Einrichtung eines Benutzerkontos eines Teilnehmers in einem IP-Netz zur Nutzung wenigstens eines Nachrichtendienstes des IP-Netzes ausgebildet ist.

Neben der Mobilfunkkommunikation, insbesondere in Mobilfunknetzen gemäß einem GSM-, GPRS- und/oder UMTS-Funknetzstandards, haben sich zwischenzeitlich Nachrichtendienste in IP-Netzen, insbesondere E-Mail-Dienste und Chat-Dienste, ebenfalls zu einem wichtigen und bedeutsamen Kommunikationsmittel etabliert. Entsprechende Nachrichtendienste in IP-Netzen, insbesondere E-Mail-Dienste und Chat-Dienste, setzen dabei in der Regel ein Benutzerkonto beziehungsweise Nutzerkonto (User Account) voraus, welches eine Zugangsberechtigung zu einem zugangsbeschränkten IT-System (IT: Information Technology (Informationstechnik)) in einem IP-Netz ermöglicht. Benutzerkonten spielen insbesondere bei E-Mail-Diensten eine Rolle, wobei insbesondere auf einem Mailserver E-Mails mit Dateianhängen - sofern vorhanden - gespeichert werden. Ferner finden Benutzerkonten im Internet für Chatdienste Anwendung.

Dem fortwährend gegebenen Bedarf von Teilnehmern von Nachrichtendiensten nach weiterer Mobilität und mehr Unabhängigkeit kann durch die Möglichkeit einer Nutzung von Nachrichtendiensten von IP-Netzen mit und/oder von in einem Mobilfunknetz betreibbaren Endgeräten nachgekommen werden. Die Möglichkeit, E-Mail auch von einem Mobilfunktelefon aus zu versenden und/oder mit diesem zu empfangen führt zu einer weiteren Mobilität und Unabhängigkeit des Nutzers. Im Stand der Technik ist beispielsweise aus der DE 101 32 333 B4, deren Offenbarungen hiermit referenziert werden, ein Verfahren zum Zugriff auf geschützte Datenbestände oder andere Ressourcen in einem IP-Netz über ein Mobilfunknetz mittels einem Mobilfunkendgerät bekannt.

Aus dem Dokument US 2004/132429 A1 ist ein Verfahren zum Zugriff auf ein E-Mail Konto bekannt. Zur Registrierung eines erstmaligen Benutzers wird ein E-Mail Konto basierend auf einer von dem Benutzer übertragenen MSISDN eingerichtet. Die zum anschließenden Zugriff auf das E-Mail Konto notwendige Kombination aus Benutzername und Passwort wird automatisch generiert und unter Verweis auf die MSISDN des Benutzers in einer Datenbank hinterlegt.

Aus dem Dokument US 6,788,769 B1 ist ein System zur Bereitstellung eines Internet basierten Telefonverzeichnisses bekannt. Eine Datenbank wird verwendet, in welcher Daten von Benutzern hinterlegt sind. Für jeden Benutzer wird eine Telefonnummer als Teil einer E-Mail Adresse hinterlegt. Entsprechend ist es möglich, einen Benutzer aufgrund der hinterlegten Telefonnummer per E-Mail zu kontaktieren.

Das Einrichten und/oder Synchronisieren von entsprechenden Benutzerkonten von Teilnehmern in einem IP-Netz zur Nutzung wenigstens eines Nachrichtendienstes des IP-Netzes mit einem in einem Mobilfunknetz betreibbaren Endgerät über das Mobilfunknetz ist oftmals insbesondere für ungeübte und/oder unerfahrene Nutzer beziehungsweise Teilnehmer aufwändig und schwierig, insbesondere da entsprechende Benutzerkonten in der Regel auf einem IP-basierten Server beheimatet sind, mit welchen in dem Mobilfunknetz betreibbare Endgeräte zum Austausch von Daten, insbesondere E-Mail-Daten, kommunizieren müssen beziehungsweise können müssen. Im Rahmen eines ersten Kommunikationsaufbaus müssen dabei insbesondere bei der Einrichtung eines entsprechenden Benutzerkontos als Zugangsberechtigung ein Benutzername, Paßwörter, Kennwörter und gegebenenfalls weitere Zugangsdaten eingegeben werden, beispielsweise eine E-Mailadresse. Insgesamt wird das Einrichten von Benutzerkonten dadurch insbesondere für ungeübte und/oder unerfahrene Nutzer aufwändig, schwierig und damit unattraktiv.

Der Erfindung liegt in Anbetracht dieses Standes der Technik die Aufgabe zugrunde, die Einrichtung eines Benutzerkontos eines Teilnehmers in einem IP-Netz zur Nutzung wenigstens eines Nachrichtendienstes des IP-Netzes zu verbessern, insbesondere hinsichtlich der erstmaligen Einrichtung eines Benutzerkontos eines Teilnehmers in einem IP-Netz zur Nutzung wenigstens eines Nachrichtendienstes des IP-Netzes.

Diese Aufgabe wird gelöst durch den Gegenstand des Anspruchs 1.

Der Erfindung liegt die Erkenntnis zugrunde, dass durch die erfindungsgemäße Nutzung einer dem Teilnehmer seitens des Mobilfunknetzes zugeordneten eindeutigen Kennung im Rahmen einer vorzugsweise automatischen Kommunikationsverbindung zwischen einem Teilnehmer und einer Vorrichtung zur Einrichtung und/oder Verwaltung von Benutzerkonten von Teilnehmern in dem IP-Netz vorteilhafterweise automatisch ein Benutzerkonto für den Teilnehmer einrichten lässt, ohne dass der Teilnehmer als Nutzer umfangreiche und aufwändige Zugangsdaten für die Einrichtung des Benutzerkontos eingeben muss.

Gemäß der Erfindung wird die eindeutige Kennung aus einer Informationen von Teilnehmern in dem Mobilfunknetz verwaltenden Datenbank des Mobilfunknetzes bestimmt. Vorteilhafterweise ist die Datenbank das Heimatregister (HLR: Home Location Register) des Mobilfunknetzes, in dem dem Teilnehmer die eindeutige Kennung zugeordnet ist.

In einer besonders vorteilhaften Ausgestaltung der Erfindung wird als eindeutige Kennung des Teilnehmers in dem Mobilfunknetz die MSISDN (MSISDN: Mobile Subscriber ISDN; ISDN: Integrated Services Digital Network) und/oder die IMSI (IMSI: International Mobile Subscriber Identity) des Teilnehmers genutzt. Die Erfindung macht sich in dieser besonderen Ausgestaltung die Erkenntnis zunutze, dass für die Einrichtung eines Benutzerkontos nutzbaren und/oder notwendigen eindeutigen Daten eines Teilnehmers in der Regel bereits im Mobilfunknetz vorhanden sind. Über die erfindungsgemäße Nutzung der MSISDN und/oder IMSI des Teilnehmers ist dabei in besonders vorteilhafter Art und Weise eine zumindest teilautomatische Einrichtung eines Benutzerkontos realisierbar, ohne dass der Teilnehmer beziehungsweise Nutzer aufwändige Daten eingeben muss. Besonders vorteilhaft ist dabei, dass die sich insbesondere in der eindeutigen Kennung manifestierenden Daten des Teilnehmers, vorliegend insbesondere die MSISDN des Teilnehmers im Mobilfunknetz, bereits vorliegen und gültig, das heißt insbesondere verifiziert sind.

In einer weiteren vorteilhaften Ausgestaltung der Erfindung nutzt der Teilnehmer ein in einem Mobilfunknetz betreibbares Endgerät, vorzugsweise in Form eines Mobilfunktelefons, und/oder ein mit einem in einem Mobilfunknetz betreibbaren Endgerät nutzbares Mobilfunkteilnehmeridentifikationsmodul (SIM: Subscriber Identification Module).

Seitens eines in dem Mobilfunknetz betreibbaren Endgerätes des Teilnehmers, welches Endgerät als solches selbst nicht Gegenstand der Erfindung ist, wird ein Client realisiert, welcher automatisch die eindeutige Kennung des Teilnehmers in dem Mobilfunknetz aus einem mit dem Endgerät genutzten Mobilfunkteilnehmeridentifikationsmodul (SIM) des Teilnehmers ausliest und diese im Rahmen der Kommunikationsverbindung automatisch an die Vorrichtung zur Einrichtung und/oder Verwaltung von Nutzerkonten von Teilnehmern in dem IP-Netz sendet. Durch die Verwendung eines seitens eines im Mobilfunknetz betreibbaren Endgerätes des Teilnehmers realisierten Clients wird die erfindungsgemäße Einrichtung eines Benutzerkontos eines Teilnehmers in einem IP-Netz weiter vereinfacht, insbesondere derart, dass eine vollautomatisierte Ersteinrichtung eines Nutzerkontos vornehmbar beziehungsweise realisierbar ist.

Vorteilhafterweise ist der Nachrichtendienst des IP-Netzes ein E-Mail-Dienst und/oder ein eine synchrone Kommunikation zwischen Teilnehmern ermöglichender Chatdienst.

Die Vorrichtung zur Einrichtung und/oder Verwaltung von Benutzerkonten von Teilnehmern in dem IP-Netz ist vorteilhafterweise ein E-Mail- und/oder ein Chat-Server.

In einer weiteren besonders vorteilhaften Ausgestaltung der Erfindung wird erfindungsgemäß wenigstens eine automatische erstmalige Einrichtung eines Benutzerkontos eines Teilnehmers in einem IP-Netz erfindungsgemäß realisiert. Dabei werden vorteilhafterweise aus Daten des Teilnehmers, welche im Mobilfunknetz vorliegen, die für die Einrichtung eines Benutzerkontos benötigten Metadaten erzeugt und für die Einrichtung des Benutzerkontos genutzt.

Im laufenden Betrieb werden die Teilnehmerdaten vorteilhafterweise für das Auffinden entsprechend erzeugter Authentifizierungsdaten und/oder -dateien für das Benutzerkonto genutzt. Ein Teilnehmer kann so ein erfindungsgemäß eingerichtetes Benutzerkonto mit dem erfindungsgemäßen Verfahren nach der Einrichtung über das Mobilfunknetz nutzen, wobei die eindeutige Kennung dann zum Auffinden der Authentifizierungsdaten und/oder -dateien für die Nutzung des Benutzerkontos dient.

Mit dem erfindungsgemäßen Verfahren bzw. System kann beispielsweise ein Endgerät zum Betrieb in einem Mobilfunknetz, vorzugsweise einem Mobilfunknetz gemäß einem GSM-, GPRS- und/oder UMTS-Funknetzstandard, welches Endgerät als solches selbst nicht Gegenstand der Erfindung ist, zur zumindest teilautomatischen Einrichtung eines Benutzerkontos eines Teilnehmers in einem IP-Netz zur Nutzung wenigstens eines Nachrichtendienstes des IP-Netzes genutzt werden.

Das Endgerät, welches als solches selbst nicht Gegenstand der Erfindung ist, weist auf
- eine Einheit zur Einrichtung einer Kommunikationsverbindung zwischen dem Endgerät und einer Vorrichtung zur Einrichtung und/oder Verwaltung von Benutzerkonten von Teilnehmern in dem IP-Netz über das Mobilfunknetz und
- eine Einheit zur Übertragung einer dem Teilnehmer seitens des Mobilfunknetzes zugeordneten eindeutigen Kennung von dem Endgerät an die Vorrichtung zur Einrichtung und/oder Verwaltung von Benutzerkonten von Teilnehmern in dem IP-Netz unter Nutzung der Kommunikationsverbindung in dem Mobilfunknetz.

Das Endgerät, welches als solches selbst nicht Gegenstand der Erfindung ist, ist ausgebildet und/oder eingerichtet die seitens des Endgerätes auszuführenden Verfahrensschritte eines erfindungsgemäßen Verfahrens auszuführen.

Das Endgerät, welches als solches selbst nicht Gegenstand der Erfindung ist, weist eine seitens des Endgerätes zumindest teilautomatisch ausführbare Client-Anwendung auf, welche automatisch - insbesondere bei einer erstmaligen Einrichtung (Ersteinrichtung) eines Benutzerkontos - die eindeutige Kennung des Teilnehmers in dem Mobilfunknetz aus einem mit dem Endgerät genutzten Mobilfunkteilnehmeridentifikationsmodul (SIM) des Teilnehmers ausliest und diese im Rahmen einer über das Mobilfunknetz erfolgenden Kommunikationsverbindung automatisch an die Vorrichtung zur Einrichtung und/oder Verwaltung von Benutzerkonten von Teilnehmern in dem IP-Netz sendet.

Beispielsweise ist das Endgerät, welches als solches selbst nicht Gegenstand der Erfindung ist, ein mobiles Endgerät, insbesondere in Form eines Mobilfunktelefons.

Gegenstand der vorliegenden Erfindung ist ferner ein System, welches ausgebildet und/oder eingerichtet ist, die Verfahrensschritte eines erfindungsgemäßen Verfahrens auszuführen.

Weitere Einzelheiten, Merkmale und Vorteile der Erfindung werden nachfolgend anhand des in der Figur der Zeichnung dargestellten Ausführungsbeispiels näher erläutert. Dabei zeigt:

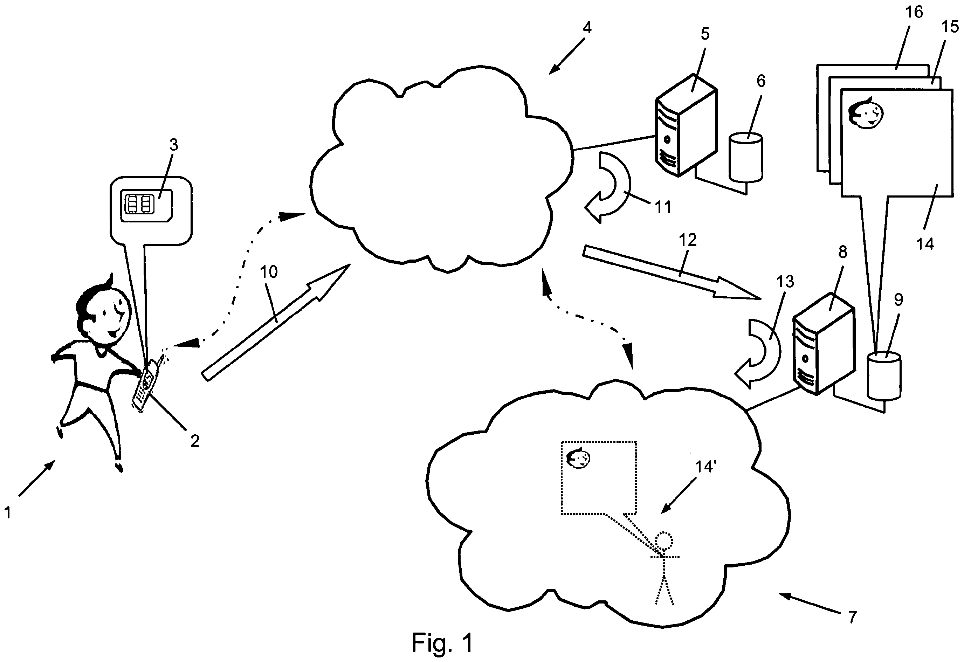

- Fig. 1: in einer schematischen Prinzipdarstellung eine erfindungsgemäße zumindest teilautomatische Einrichtung eines Benutzerkontos eines Teilnehmers in einem IP-Netz über ein Mobilfunknetz.

Fig. 1 zeigt ein prinzipielles Ausführungsbeispiel einer erfindungsgemäßen, zumindest teilautomatisch erfolgenden Einrichtung eines Benutzerkontos 14 eines Teilnehmers 1 in einem IP-Netz 7, vorliegend dem Internet 7, zur Nutzung wenigstens eines Nachrichtendienstes des IP-Netzes 7, vorliegend zur Einrichtung eines E-Mail-Kontos 14 des Teilnehmers 1 über ein Mobilfunknetz 4, vorliegend einem Mobilfunknetz 4 gemäß einem GSM-, GPRS- und/oder UMTS-Funknetzstandard.

Der Teilnehmer 1 weist vorliegend ein in dem Mobilfunknetz 4 gemäß einem GSM-, GPRS- und/oder UMTS-Funknetzstandard betreibbares mobiles Endgerät 2 auf. Der Betrieb des Endgerätes 2 in dem Mobilfunknetz 4 ist in Fig. 1 symbolisch durch den strichpunktierten Doppelpfeil zwischen dem Endgeräte 2 und dem Mobilfunknetz 4 dargestellt. Das vorliegend in Form eines Mobilfunktelefons 2 ausgebildete mobile Endgerät 2 des Teilnehmers 1 nutzt für einen Zugang zum Mobilfunknetz 4 vorliegend ein Mobilfunkteilnehmeridentifikationsmodul 3, ein sogenanntes SIM, welches in der Regel in dem mobilen Endgerät 2 austauschbar angeordnet ist. Das Mobilfunkteilnehmeridentifikationsmodul (SIM) 3 weist eine dem Teilnehmer 1 seitens des Mobilfunknetzes 4 zugeordnete eindeutige Kennung, vorliegend die sogenannte MSISDN und/oder die sogenannte IMSI auf.

In Fig. 1 ist das Mobilfunknetz 4 symbolisch durch eine Wolke dargestellt. Das Mobilfunknetz 4 weist verschiedene Einrichtungen und/oder Systeme auf, welche in Figur 1 symbolisch durch eine Recheneinrichtung 5 und eine Datenbank 6 dargestellt sind. Seitens des Mobilfunknetzes 4 ist eine Recheneinrichtung (Server) 5 vorgesehen, welche in einer Datenbank 6 insbesondere Teilnehmerdaten, Teilnehmerverbindungsdaten und/oder dergleichen Daten erfaßt und/oder verwaltet. Die in Fig. 1 symbolisch dargestellte Datenbank 6 umfasst dabei insbesondere das Heimatregister (HLR: Home Location Register) des Mobilfunknetzes 4. In dem Heimatregister (HLR) sind dabei insbesondere die den Mobilfunkteilnehmern im Mobilfunknetz eindeutig zugeordneten MSISDNs und IMSIs erfaßt.

Bei einer erstmaligen Einrichtung eines Benutzerkontos 14 für den Teilnehmer 1 im Internet 7 zur Nutzung von E-Mail-Diensten im Internet 7 wird zunächst eine Kommunikationsverbindung zwischen dem Endgerät 2 des Teilnehmers 1 und einer seitens des Internet 7 eingerichteten Vorrichtung 8 zur Einrichtung und/oder Verwaltung von Benutzerkonten 14, 15 und 16 von Teilnehmern in dem Internet 7 aufgebaut. Die Vorrichtung 8 zur Einrichtung und/oder Verwaltung von Benutzerkonten von Teilnehmern in dem Internet 7 umfasst eine in Fig. 1 symbolisch mit der Bezugsziffer 9 dargestellte Datenbank, in welcher die erforderlichen Daten für das einzurichtende Benutzerkonto - vorliegend das Benutzerkonto 14 des Teilnehmers 1 - und/oder eingerichtete Benutzerkonten 15 und16 anderer - hier nicht dargestellter Teilnehmer erfaßt und verwaltet werden.

Im vorliegenden Fall ist seitens des mobilen Endgerätes 2 des Teilnehmers 1 eine Client-Anwendung realisiert, welche automatisch die MSISDN und/oder IMSI des Teilnehmers 1 in dem Mobilfunknetz 4 aus dem Mobilfunkteilnehmeridentifikationsmodul (SIM) 3 - welches der Teilnehmer 1 von dem Betreiber des Mobilfunknetzes 4 erhalten hat - ausliest und diese im Rahmen der Kommunikationsverbindung automatisch an die Vorrichtung 8 zur Einrichtung und/oder Verwaltung von Benutzerkonten 14, 15, 16 von Teilnehmern in dem Internet 7 sendet. Der Teilnehmer 1 wird hierzu vorliegend von der Client-Anwendung seitens des Endgerätes 2 automatisch bei Erstgebrauch und/oder Ersteinrichtung gefragt, ob dieser ein Benutzerkonto zur Benutzung von E-Mail-Diensten seitens des Internets 7 mit seinem Endgerät 2 über das Mobilfunknetz 4 einrichten möchte. Auf diese Anfrage muss der Teilnehmer 1 vorliegend lediglich eine Taste seitens einer eine Tastatur umfassenden Eingabeeinrichtung des Endgerätes 2 betätigen. Durch Betätigen der Taste seitens des Endgerätes 2 durch den Teilnehmer 1 ermittelt die seitens des Endgerätes 2 ausgeführte Client-Anwendung die MSISDN und/oder die IMSI des Teilnehmers 1 aus dem Mobilfunkteilnehmeridentifikationsmodul (SIM) 3 und überträgt diese über das Mobilfunknetz 4 an die Vorrichtung 8 zur Einrichtung und/oder Verwaltung von Benutzerkonten von Teilnehmern in dem Internet 7. Die Ermittlung und Übertragung der MSISDN und/oder der IMSI des Teilnehmers 1 ist in Fig. 1 durch den mit dem Bezugszeichen 10 gekennzeichneten Pfeil symbolisch dargestellt.

Seitens des Mobilfunknetzes 4 werden dann vorliegend zu der MSISDN und/oder der IMSI des Teilnehmers 1 weitere Teilnehmerdaten aus dem Heimatregister (HLR) 6 des Mobilfunknetzes 4 ermittelt (in Fig. 1 durch den mit Bezugszeichen 11 gekennzeichneten Pfeil symbolisch dargestellt) und diese Daten dann über das Mobilfunknetz 4 an die Vorrichtung 8 zur Einrichtung und/oder Verwaltung von Benutzerkonten von Teilnehmern in dem Internet 7 übertragen (in Fig. 1 durch den mit Bezugszeichen 12 gekennzeichneten Pfeil symbolisch dargestellt).

Seitens der Vorrichtung 8 wird dann automatisch für den Teilnehmer 1 unter Nutzung der MSISDN und/oder der IMSI des Teilnehmers 1 ein Benutzerkonto 14 zur Nutzung von E-Mail-Diensten im Internet 7 eingerichtet. Die Einrichtung des Benutzerkontos 14 seitens der Vorrichtung 8 ist in Fig. 1 symbolisch durch den mit Bezugszeichen 13 gekennzeichneten Pfeil dargestellt. Das eingerichtete Benutzerkonto 14 des Teilnehmers 1 im Internet 7 ist in Fig. 1 symbolisch durch das mit Bezugszeichen 14' symbolisch gekennzeichnete strichpunktierte Benutzerkonto 14' dargestellt. Das Benutzerkonto 14 beziehungsweise 14' des Teilnehmers 1 ist dabei vorliegend von dem Teilnehmer 1 mit dem Endgerät 2 und/oder dem Mobilfunkteilnehmeridentifikationsmodul (SIM) 3 vorteilhafterweise direkt für E-Mail-Dienste nutzbar. Das Benutzerkonto 14 beziehungsweise 14' des Teilnehmers 1 weist dabei vorliegend eine wie folgt aufgebaute E-Mail-Adresse auf: (MSISDN und/oder IMSI des Teilnehmers 1 im Mobilfunknetz 4)@(Domain des Mobilfunknetzbetreibers des Mobilfunknetzes 4 im Internet).

Das in der Figur der Zeichnung dargestellte und im Zusammenhang mit dieser beschriebene Ausführungsbeispiel der Erfindung dient lediglich der Erläuterung der Erfindung und ist für diese nicht beschränkend.

### Bezugszeichenliste:

- 1: Teilnehmer
- 2: Endgerät (Teilnehmer (1))
- 3: Mobilfunkteilnehmeridentifikationsmodul/SIM (Teilnehmer (1))
- 4: Mobilunknetz
- 5: Recheneinrichtung/Server (Mobilfunknetz (4))
- 6: Datenbank/HLR (Mobilfunknetz (4), Recheneinrichtung (5))
- 7: IP-Netz/Internet
- 8: Vorrichtung zur Einrichtung und/oder Verwaltung von Benutzerkonten
- 9: Datenbank (Vorrichtung (8))
- 10: Ermittlung und Übertragung eindeutige Kennung (MSISDN und/oder IMSI)
- 11: Ermittlung weitere Daten
- 12: Übertragung Kennung und weitere Daten
- 13: Erzeugung Benutzerkonto (14, 14')
- 14, 14': Benutzerkonto (Teilnehmer (1))
- 15: Benutzerkonto
- 16: Benutzerkonto

## Patentansprüche

1. Verfahren zur zumindest teilautomatischen Einrichtung eines Benutzerkontos (14 bzw. 14') eines Teilnehmers (1) in einem IP-Netz (7) zur Nutzung wenigstens eines Nachrichtendienstes des IP-Netzes (7),
umfassend die folgenden Verfahrensschritte:
- Einrichtung einer Kommunikationsverbindung zwischen einer Vorrichtung (8) zur Einrichtung und/oder Verwaltung von Benutzerkonten von Teilnehmern in dem IP-Netz und einem Teilnehmer (1) über ein Mobilfunknetz (4), insbesondere gemäß einem GSM-, GPRS- und/oder UMTS-Funknetzstandard;
- Übertragung einer dem Teilnehmer (1) seitens des Mobilfunknetzes (4) zugeordneten eindeutigen Kennung von dem Teilnehmer (1) an die Vorrichtung (8) zur Einrichtung und/oder Verwaltung von Benutzerkonten (14 bzw. 14', 15, 16) von Teilnehmern in dem IP-Netz (7) unter Nutzung der Kommunikationsverbindung (10, 12) in dem Mobilfunknetz (4); und
- Erzeugung eines Benutzerkontos (14 bzw. 14') für den Teilnehmer (1) unter Nutzung der eindeutigen Kennung des Teilnehmers (1) in dem Mobilfunknetz (4) seitens der Vorrichtung (8) zur Einrichtung und/oder Verwaltung von Benutzerkonten (14 bzw. 14', 15, 16) von Teilnehmern (1) in dem IP-Netz (7),
**dadurch gekennzeichnet, dass**
seitens des Mobilfunknetzes (4) aus einer Informationen von Teilnehmern in dem Mobilfunknetz (4) verwaltenden Datenbank (6) des Mobilfunknetzes (4), wobei
die Datenbank (6) das Heimatregister (HLR) des Mobilfunknetzes (4) ist in dem dem Teilnehmer (1) die eindeutige Kennung zugeordnet ist, weitere Teilnehmerdaten des Teilnehmers (1) zu der eindeutigen Kennung ermittelt werden und diese Daten über das Mobilfunknetz (4) an die Vorrichtung (8) zur Einrichtung und/oder Verwaltung von Benutzerkonten (14 bzw. 14', 15, 16) von Teilnehmern (1) übertragen werden und die für die Einrichtung des Benutzerkontos (14 bzw. 14') benötigten Metadaten erzeugt und für die Einrichtung des Benutzerkontos (14 bzw. 14') genutzt werden.

2. Verfahren nach Anspruch 1, **dadurch gekennzeichnet, dass** als eindeutige Kennung des Teilnehmers (1) in dem Mobilfunknetz (4) die MSISDN und/oder die IMSI des Teilnehmers (1) genutzt wird.

3. Verfahren nach Anspruch 1 oder Anspruch 2, **dadurch gekennzeichnet, dass** der Teilnehmer (1) ein in einem Mobilfunknetz (4) betreibbares Endgerät (2), vorzugsweise in Form eines Mobilfunktelefons (2), und/oder ein mit einem in einem Mobilfunknetz (4) betreibbaren Endgerät (2) nutzbares Mobilfunkteilnehmeridentifikationsmodul (3, SIM) nutzt.

4. Verfahren nach einem der Ansprüche 1 bis 3, **dadurch gekennzeichnet, dass** seitens eines in dem Mobilfunknetz (4) betreibbaren Endgerätes (2) des Teilnehmers (1) ein Client realisiert wird, welcher automatisch die eindeutige Kennung des Teilnehmers (1) in dem Mobilfunknetz (4) aus einem mit dem Endgerät (2) genutzten Mobilfunkteilnehmeridentifikationsmodul (3, SIM) des Teilnehmers (1) ausliest und diese im Rahmen der Kommunikationsverbindung automatisch an die Vorrichtung (8) zur Einrichtung und/oder Verwaltung von Benutzerkonten von Teilnehmern in dem IP-Netz (7) sendet.

5. Verfahren nach einem der Ansprüche 1 bis 4, **dadurch gekennzeichnet, dass** der Nachrichtendienst des IP-Netzes ein E-Mail-Dienst und/oder ein eine synchrone Kommunikation zwischen Teilnehmern ermöglichender Chat-Dienst ist.

6. Verfahren nach einem der Ansprüche 1 bis 5, **dadurch gekennzeichnet, dass** die Vorrichtung zur Einrichtung und/oder Verwaltung von Benutzerkonten von Teilnehmern in dem IP-Netz (7) ein E-Mail- und/oder ein Chat-Server ist.

7. Verfahren nach einem der Ansprüche 1 bis 6, **dadurch gekennzeichnet, dass** dieses wenigstes eine automatische erstmalige Einrichtung eines Benutzerkontos (14 bzw. 14') eines Teilnehmers (1) in einem IP-Netz (7) realisiert.

8. System, welches ausgebildet und/oder eingerichtet ist die Verfahrensschritte eines Verfahrens nach einem der Ansprüche 1 bis 7 auszuführen.

## Claims

1. A method for the at least partially automatic setting up of a user account (14 or 14') of a subscriber (1) in an IP network (7) for using at least one message service of the IP network (7),
comprising the following process steps:
- establishing a communication connection between a device (8) for setting up and/or administrating user accounts of subscribers in the IP network and a subscriber (1) via a mobile radio network (4), in particular according to a GSM, GPRS and/or UMTS radio network standard;
- transmitting an unequivocal identifier allocated to the subscriber (1) by the mobile radio network (4) from the subscriber (1) to the device (8) for setting up and/or administrating user accounts (14 or 14', 15, 16) of subscribers in the IP network (7) using the communication connection (10, 12) in the mobile radio network (4); and
- generating a user account (14 or 14') for the subscriber (1) using the unequivocal identifier of the subscriber (1) in the mobile radio network (4) by means of the device (8) for setting up and/or administrating user accounts (14 or 14', 15, 16) of subscribers (1) in the IP network (7),
**characterized in that**
using a database (6) of the mobile radio network (4) which administrates information of subscribers in the mobile radio network (4), wherein the database (6) is the home location register (HLR) of the mobile radio network (4) in which the unequivocal identifier is allocated to the subscriber (1), the mobile radio network (4) determines other subscriber data of the subscriber (1) in addition to the unequivocal identifier and these data will be transmitted via the mobile radio network (4) to the device (8) for setting up and/or administrating user accounts (14 or 14', 15, 16) of subscribers and the meta data required for setting up the user account (14 or 14') will be generated and used for setting up the user account (14 or 14').

2. A method according to claim 1, **characterized in that** the MSISDN and/or the IMSI of the subscriber (1) will be used as unequivocal identifier of the subscriber (1) in the mobile radio network (4).

3. A method according to claim 1 or claim 2, **characterized in that** the subscriber (1) uses a terminal (2) which can be operated in a mobile radio network (4), preferably in form of a mobile phone (2), and/or a mobile phone subscriber identification module (3, SIM) which can be used with a terminal (2) that can be operated in a mobile radio network (4).

4. A method according to one of the claims 1 to 3, **characterized in that** a client will be realized by a terminal (2) of the subscriber (1), which terminal can be operated in the mobile radio network (4), which client automatically reads out the unequivocal identifier of the subscriber (1) in the mobile radio network (4) from a mobile phone subscriber identification module (3, SIM) of the subscriber (1) that is used with the terminal (2) and automatically sends this within the scope of the communication connection to the device (8) for setting up and/or administrating user accounts of subscribers in the IP network (7).

5. A method according to one of the claims 1 to 4, **characterized in that** the message service of the IP network is an email service and/or a chat service which enables a synchronous communication between subscribers.

6. A method according to one of the claims 1 to 5, **characterized in that** the device for setting up and/or administrating user accounts of subscribers in the IP network (7) is an email server and/or a chat server.

7. A method according to one of the claims 1 to 6, **characterized in that** this one at least realizes an automatic first-time setting up of a user account (14 or 14') of a subscriber (1) in an IP network (7).

8. A system which is designed and/or adapted to carry out the process steps of a method according to one of the claims 1 to 7.

## Revendications

1. Procédé pour la création au moins partiellement automatique d'un compte d'utilisateur (14 respectivement 14') d'un abonné (1) dans un réseau IP (7) pour l'utilisation d'au moins un service de messages du réseau IP (7), comprenant les étapes de procédé suivantes de:
- établir une liaison de communication entre un dispositif (8) pour la création et/ou la gestion de comptes d'utilisateur d'abonnés dans un réseau IP et un abonné (1) via un réseau radio mobile (4), notamment selon un standard de réseau radio GSM, GPRS et/ou UMTS ;
- transmettre un identifiant univoque attribué à l'abonné (1) par le réseau radio mobile (4) de l'abonné (1) au dispositif (8) pour la création et/ou la gestion de comptes d'utilisateur (14 respectivement 14', 15, 16) d'abonnés dans le réseau IP (7) en utilisant la liaison de communication (10, 12) dans le réseau radio mobile (4) ; et
- générer un compte d'utilisateur (14 respectivement 14') pour l'abonné (1) en utilisant l'identifiant univoque de l'abonné (1) dans le réseau radio mobile (4) par moyen du dispositif (8) pour la création et/ou la gestion de comptes d'utilisateur (14 respectivement 14', 15, 16) d'abonnés (1) dans le réseau IP,
**caractérisé en ce qu'**
en utilisant une base de données (6) du réseau radio mobile (4), qui gère des informations d'abonnés dans le réseau radio mobile (4), la base de données (6) étant le registre de localisation nominale (HLR) du réseau radio mobile (4), dans lequel l'identifiant univoque est attribué à l'abonné (1), le réseau radio mobile (4) détermine d'autres données d'abonné de l'abonné (1) en plus de l'identifiant univoque et ces données sont transmises via le réseau radio mobile (4) au dispositif (8) pour la création et/ou la gestion de comptes d'utilisateur (14 respectivement 14', 15, 16) d'abonnés (1) et les métadonnées, qui sont nécessaires pour la création du compte d'utilisateur (14 respectivement 14'), sont générées et utilisées pour créer le compte d'utilisateur (14 respectivement 14').

2. Procédé selon la revendication 1, **caractérisé en ce que** la MSISDN et/ou l'IMSI de l'abonné (1) est utilisée comme l'identifiant univoque de l'abonné (1) dans le réseau radio mobile (4).

3. Procédé selon la revendication 1 ou la revendication 2, **caractérisé en ce que** l'abonné (1) utilise un terminal (2), qui fonctionne dans un réseau radio mobile (4), de préférence en forme d'un téléphone mobile (2), et/ou un module d'identification d'abonné mobile (3, SIM) utilisable avec un terminal (2), qui fonctionne dans un réseau radio mobile (4).

4. Procédé selon l'une des revendications 1 à 3, **caractérisé en ce qu'**un client est réalisé par moyen d'un terminal (2) de l'abonné (1), lequel terminal fonctionne dans le réseau radio mobile (4), lequel client lit automatiquement l'identifiant univoque de l'abonné (1) dans le réseau radio mobile (4) dans un module d'identification d'abonné mobile (3, SIM) de l'abonné (1), lequel est utilisé avec le terminal (2), et envoie cet identifiant univoque dans le cadre de la liaison de communication automatiquement au dispositif (8) pour la création et/ou la gestion de comptes d'utilisateur d'abonnés dans un réseau IP (7).

5. Procédé selon l'une des revendications 1 à 4, **caractérisé en ce que** le service de messages du réseau IP est un service de courriel et/ou un service de chat permettant une communication synchrone entre des abonnés.

6. Procédé selon l'une des revendications 1 à 5, **caractérisé en ce que** le dispositif pour la création et/ou la gestion de comptes d'utilisateur d'abonnés dans le réseau IP (7) est un serveur de courriel et/ou un serveur de chat.

7. Procédé selon l'une des revendications 1 à 6, **caractérisé en ce que** celui-ci réalise au moins une première création automatique d'un compte d'utilisateur (14 respectivement 14') d'un abonné (1) dans un réseau IP (7).

8. Système, qui est conçu pour et/ou adapté à exécuter les étapes de procédéd'un procédé selon l'une des revendications 1 à 7.
